(19) Europäisches Patentamt

European Patent Office

Office européen des brevets

(11) **EP 0 322 116 B1**

(12) **EUROPEAN PATENT SPECIFICATION**

(45) Date of publication and mention
of the grant of the patent:
**19.01.2000 Bulletin 2000/03**

(51) Int. Cl.[7]: **G06F 15/16**, H04L 12/42

(21) Application number: **88311138.7**

(22) Date of filing: **24.11.1988**

(54) **Interconnect system for multiprocessor structure**

Zwischenverbindungssystem für Multiprozessorstruktur

Système d'interconnexion pour une structure multiprocesseur

(84) Designated Contracting States:
**AT BE CH DE ES FR GB GR IT LI LU NL SE**

(30) Priority: **22.12.1987 US 136701**

(43) Date of publication of application:
**28.06.1989 Bulletin 1989/26**

(60) Divisional application:
**99201131.2 / 0 936 778**

(73) Proprietor:
**SUN MICROSYSTEMS, INC.
Mountain View, CA 94043 (US)**

(72) Inventors:
• **Frank, Steven J.
Hopkinton Massachusetts 01748 (US)**
• **Burkhardt Henry III
Manchester Massachusetts 01944 (US)**
• **Weber, Frederick D.
Cambridge Massachusetts 02138 (US)**

(74) Representative:
**Harris, Ian Richard et al
D. Young & Co.,
21 New Fetter Lane
London EC4A 1DA (GB)**

(56) References cited:
**EP-A- 0 014 926**    **EP-A- 0 110 569**
**US-A- 4 622 631**

EP 0 322 116 B1

**Description**

Background of the Invention

This invention relates generally to digital data processing systems, and, in particular, to a bus structure suitable for use with multiprocessor computer systems.

Multiprocessor computer systems provide multiple independent central processing units (CPUs) which can be coherently interconnected. Recent efforts in the multiprocesor field have concentrated on multiprocessor systems wherein each of a plurality of processors is equipped with a dedicated random access or cache memory unit. These multiple processors typically communicate with one another via a common system bus structure (i.e shared bus systems), or by signalling within a shared memory address area (i.e. shared address space systems).

In recent years, a wide range of structures and methods have been proposed or developed to interconnect the processors of a shared bus system multiprocessor.

One such shared bus muliprocessing computer system is disclosed in United Kingdom Patent Application No. 2,178,205 (published February 4, 1987). That system is understood to comprise a plurality of processors, each having its own dedicated cache memory, and wherein the cache memories are connected to one another over a shared bus.

Conventional shared bus systems, however, lack adequate bandwidth to provide multiple processors with short effective access times during periods of high bus contention. Although a number of caching schemes have been proposed and developed for the purpose of reducing bus contention, bus saturation still limits the speed and size of multiprocessor computers.

Additionally, the speed of a conventional bus structure is limited by the speed of light and by bus length. In particular, as more processors are linked to a conventional bus, bus length increases and thus the time required for signal transfer increases.

Another class of interconnection systems, known as crossbar networks, avoid some of the limitations of conventional bus systems. In a crossbar network, however, the path taken by a given signal cannot be uniquely specified. Moreover, cost increases as the square of the number of interconnected processors. These characteristics make crossbar networks unsuitable for multiprocessor systems.

There accordingly exists a need for an interconnection system for multiprocessor computer systems which can accomodate the large volume of interconnect access requests generated by multiple processors. In particular, there exists a need for an interconnection system in which transfer speed is independent of the number of interconnected processors.

EP-A-0.014,926 discloses a digital data processing system according to the preamble of claim 1.

As disclosed at Figure 2 of this publication each interface includes two parallel shift registers which can be alternately switched for connection with an interprocessor bus ring and associated processor. The interface can only copy out the function of routing a given packet of information.

It is thus an object of the invention to provide an improved multiprocessor digital data processing system.

The present invention is characterized by the features of the characterizing portion of claim 1.

In one embodiment of the invention, the bus structure comprises unidirectional information-representative signal flow paths, and the cell interconnect units include elements for driving information-representative signals along the flow path defined by the bus structure.

Preferably each stage of the shift register element includes latch and register elements for storing a digital information-representative signal word of (n) digital bits, where (n) is a positive integer, and the cell interconnect units include timing control elements responsive to applied digital clock cycle signals for sequentially driving information-representative digital words through successive stages of the shift register element at a rate controlled by the digital clock cycle rate. In accordance with this aspect of the invention, the shift register element includes elements for storing in a given stage of the shift register element a given digital word for one applied digital clock cycle, and transferring a given digital word to a succeeding stage of the shift register element after an applied digital clock cycle. Moreover, in this aspect of the invention, each cell interconnect unit has associated therewith a subset of (s) stages of the shift register structure, where (s) is a positive integer, so that a given digital word is resident in a stage associated with each cell interconnect unit for (s) applied digital clock cycles.

The shift register structure may include elements for sequentially tansferring digital signal packets comprising (w) corresponding digital words, where (w) is a positive integer, so that a digital word corresponding to a given digital signal packet is resident in at least one stage associated with a given cell interconnect unit for (s) X (w) digital clock cycles.

Brief Description of the Drawings

Embodiments of the present invention will now be described, by way of example, with reference to accompanying drawings, in which:

Figure 1 depicts the structure of a multiprocessor computer system constructed in accordance with the invention;
Figure 2 depicts detail of the structure of a processing cell illustrated in Figure 1;
Figure 3 depicts a plurality of the processing cells of Figure 2 interconnected by a bus system constructed in accordance with the invention;
Figure 4 depicts detail of the structure of a cell interconnect of Figure 3;
Figure 5 depicts detail of the structure of a cell interconnect unit in the cell interconnect of Figure 4;
Figure 6 depicts the shift register stages associated with the cell interconnects of Figure 3;
Figure 7 depicts clock signal distribution in the embodiment of Figure 3; and
Figure 8 depicts the contents of an exemplary data packet processed by the embodiment of Figure 3.

Description of the Illustrated Embodiment Structure

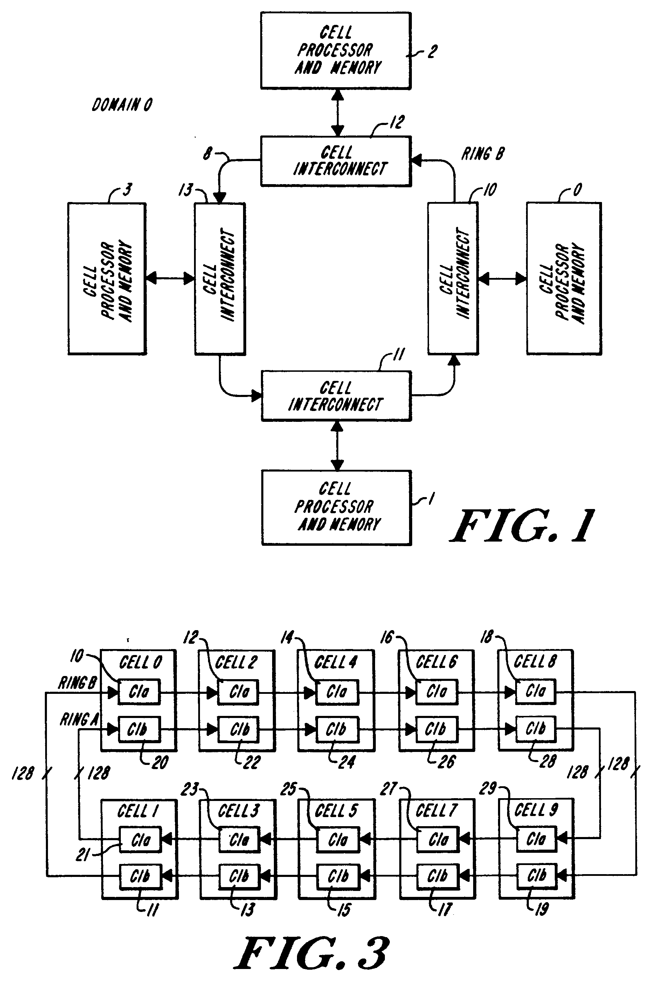

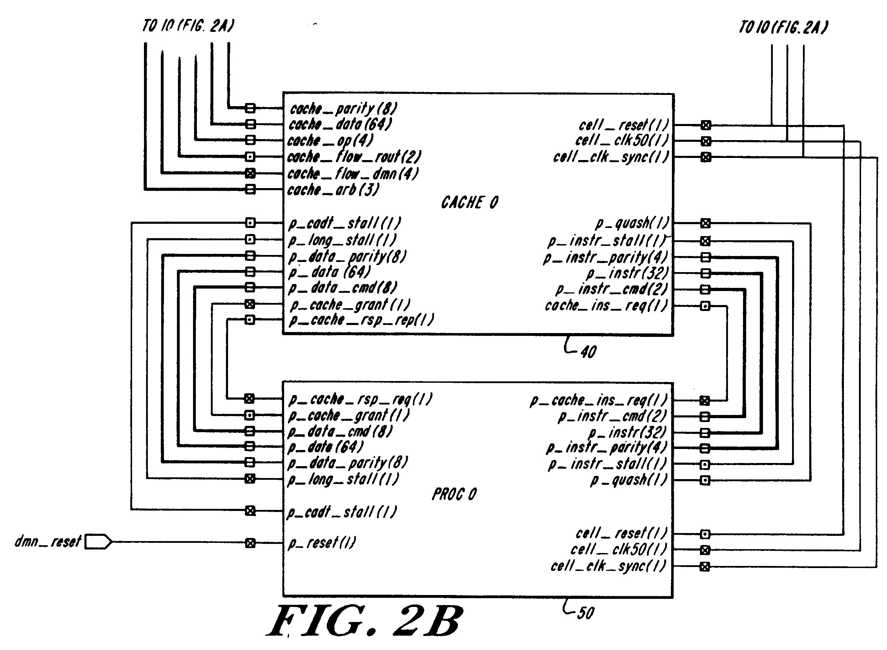

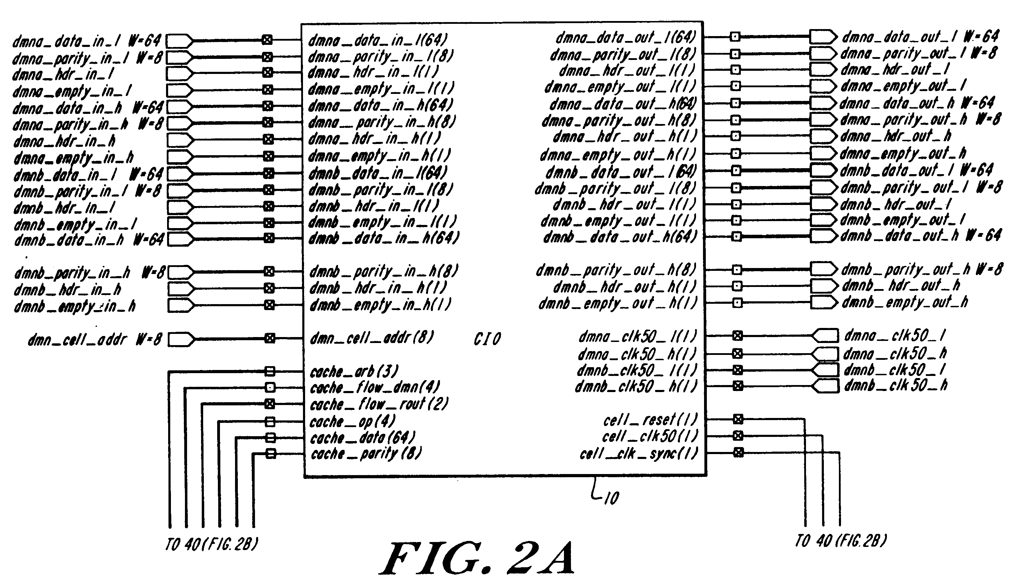

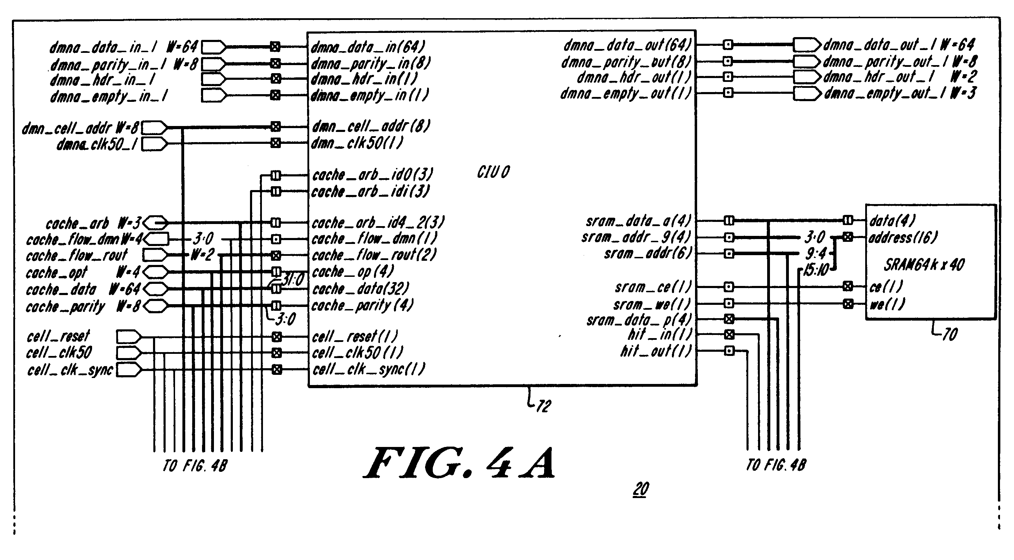

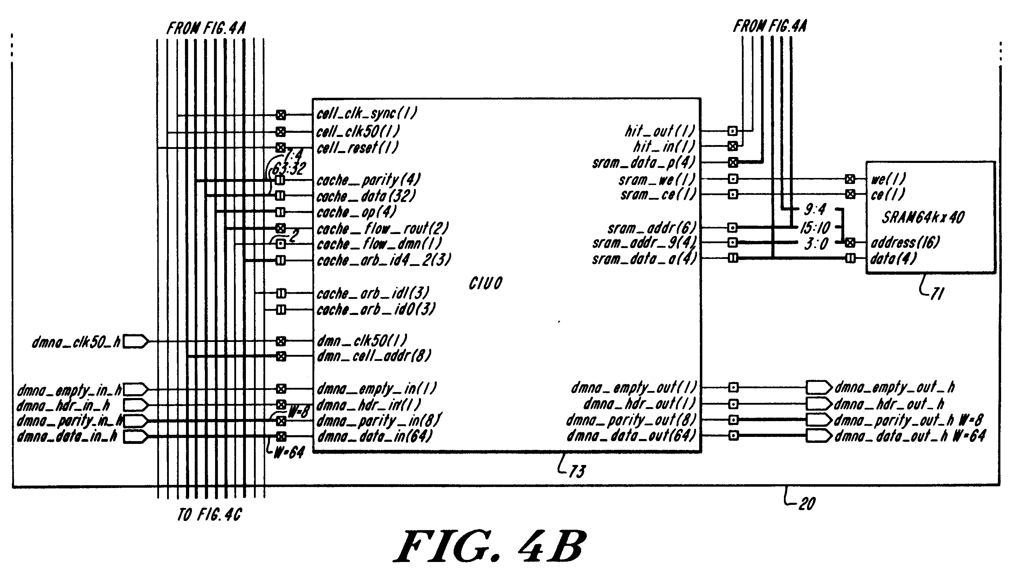

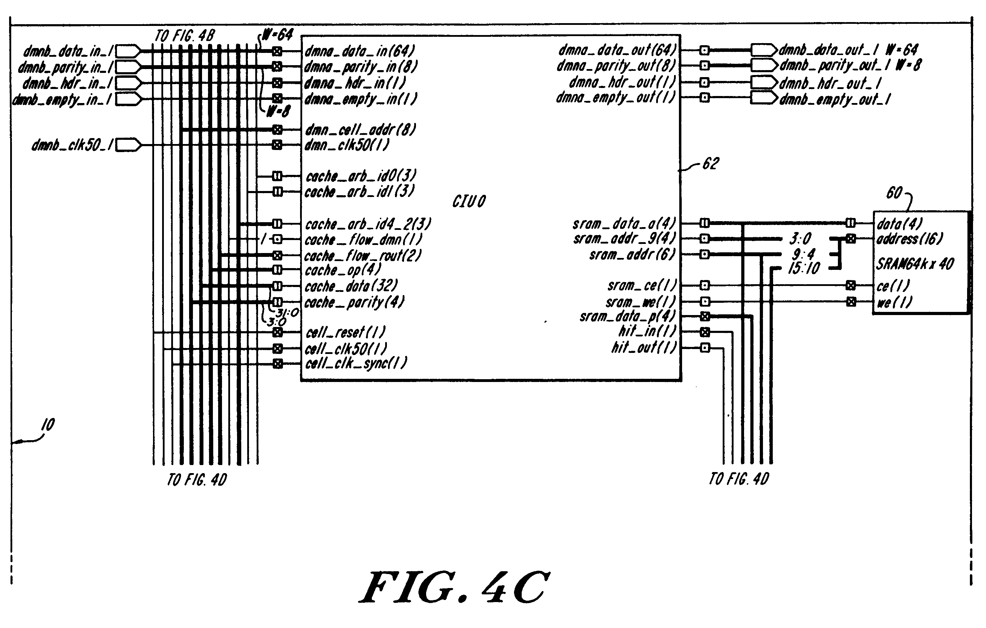

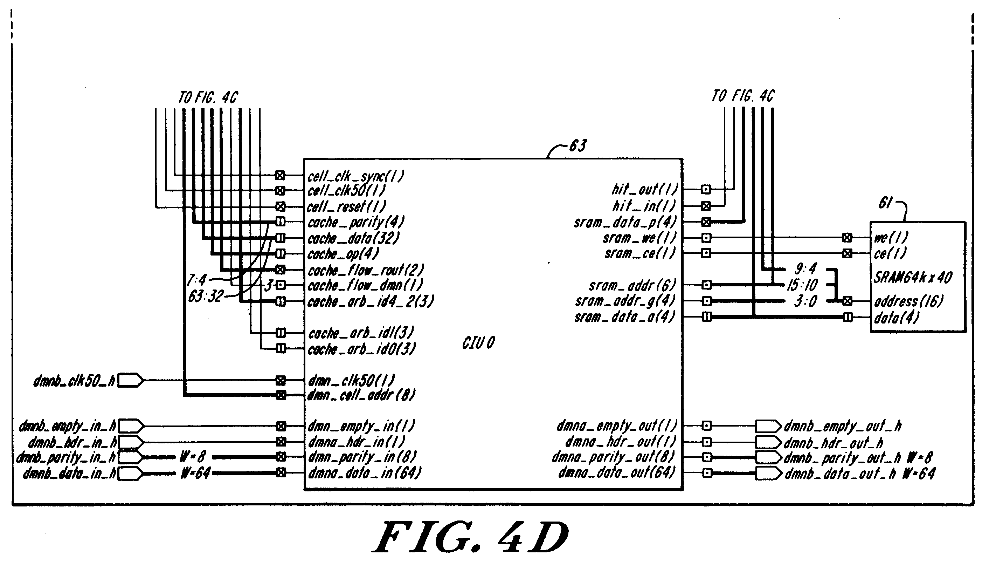

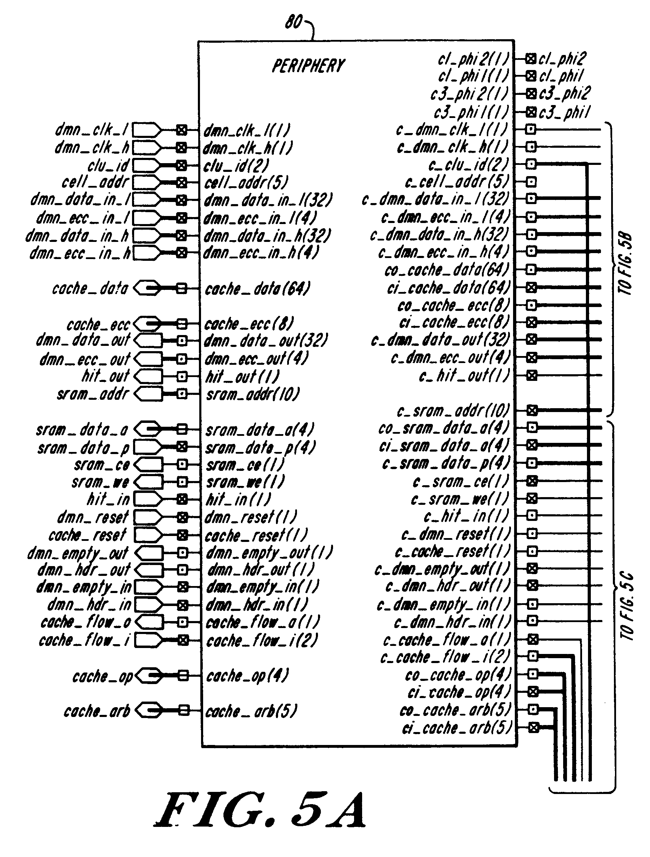

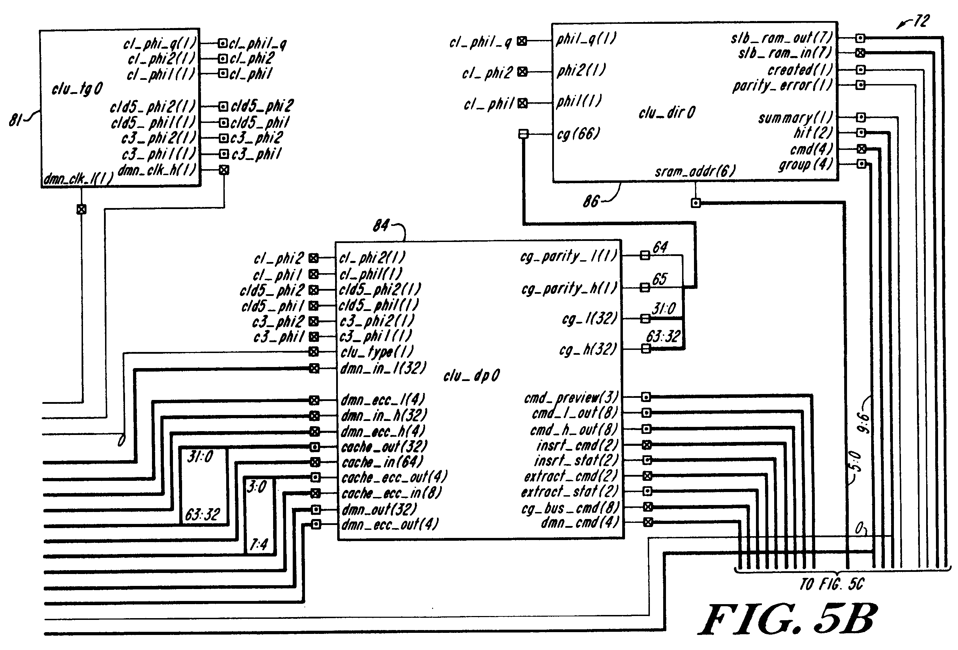

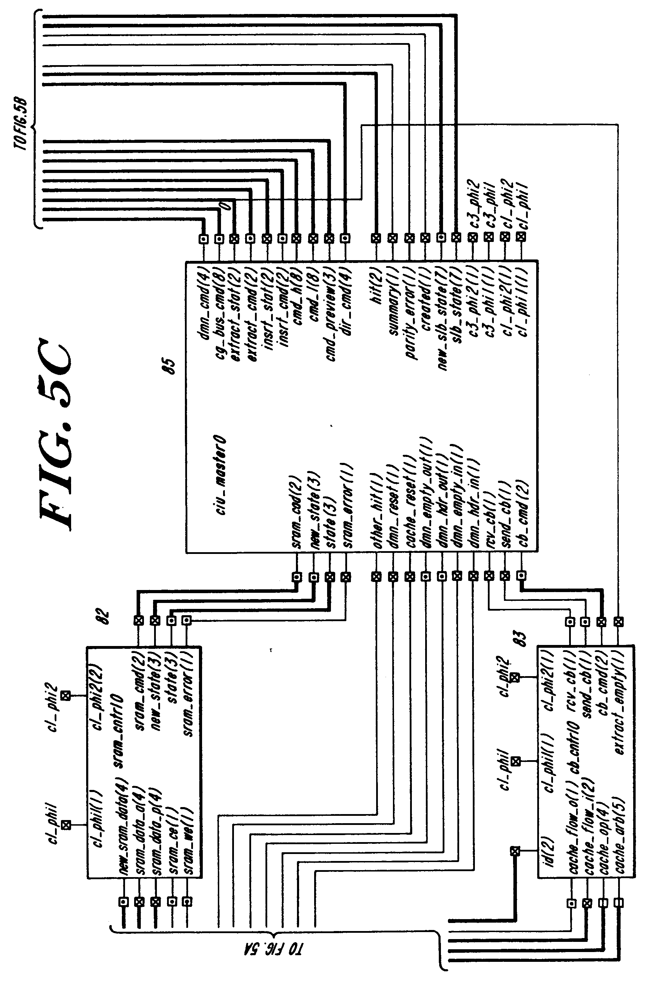

Figure 1 depicts a multiprocessor computer utilizing a bus system constructed in accordance with the invention. The multiprocessor system is hierarchically constructed from processors, cells and domains. Each of the processing cells 0, 1, 2 and 3 contains a processor and cache memory, as discussed below in connection with Figure 2. The cells 0-3 are interconnected by cell interconnects (CIs) 10-13 and bus 8, thereby collectively forming Domain 0. Domains, in turn, are interconnected by domain interconnects (not shown), to form a complete system. The structure of cell interconnects is described hereinafter in connection with Figures 4 and 5, and the structure and operation of the illustrated multiprocessor system is more fully discussed in co-pending European an Patent Application EP-A-0 322 177.

Figure 2 depicts the components of processing cell 0, including processor (PROC) 50, cache 40 and cell interconnect (CI) 10. Data, parity, and control signals passed between processor 50, cache 40 and cell interconnect 10 are indicated in Figure 2. The datapath width associated with each respective signal is indicated by numerals in brackets. For example, cache data signals (cache_data [64]) passed between cell interconnect 10 and cache 40 have a 64 bit datapath width, as do processor data signals (p_data[64]) passed between cache 40 and processor 50.

As FIGURE 2 illustrates, cell interconnect 10 receives and transmits DOMAIN DATA signals (dmn_data), DOMAIN PARITY signals dmn_parity), DOMAIN EMPTY signals (dmn_empty), DOMAIN HEADER signals (dmn_hdr), DOMAIN CELL ADDRESS signals (dmn_cell_addr), and DOMAIN CLOCK signals (dmn_clk50) discussed in greater detail hereinafter. In addition, cell interconnect 10 processes cache arbitration, routing, operation, and parity signals as indicated in FIGURE 2. The structure of cell interconnect 10 is discussed in greater detail below in connection with FIGURE 4. Moreover, further understanding of the logic components and structure of cache 40 and processor 50 may be had by reference to the aforementioned copending European application. Cell interconnect 10 provides interconnection of cell 0 into a multiple-cell domain like that depicted in FIGURE 3.

FIGURE 3 illustrates the configuration of a ten cell domain, containing cells 0-9 interconnected in accordance with the invention in a dual ring bus structure organized as ring A and ring B. Utilizing plural rings is an important feature of the embodiment, which enables the system to continue operating in the event of single point component failures, and increases the bandwidth of the interconnection system. In a preferred practice of the invention, utilizing two rings, A and B, ring A is configured for transfers involving even page addresses in memory, and ring B for odd page addresses in memory. This interleaving mode is discussed in greater detail hereinafter. Those skilled in the art will understand that the invention may be practiced in an embodiment having more than two rings.

Rings A and B are preferably 50 megahertz synchronous shift registers having plural data storage stages with a 128 bit datapath width, as indicated in FIGURE 3. Each of the cells 0-9 communicates with rings A and B through two associated Cell Interconnects (CIs). As FIGURE 3 illustrates, cell interconnects 10-19 connect cells 0-9, respectively, to ring B, while cell interconnects 20-29 connect cells 0-9, respectively, to ring A.

A preferred cell interconnect structure is illustrated in FIGURE 4. Two cell interconnect units (CIUs) 72 and 73 and two 64K x 4 static RAMs (SRAMs) 70 and 71 are configured in pairs to form a single cell interconnect 20. Similarly, cell interconnect units 62 and 63, and SRAMs 60 and 61 are utilized to form cell interconnect 10. Each cell interconnect presents two 64 bit data connections from its cell to a respective ring (dmn_data) and one 64 bit connection to its cell cache bus (cache_data). The structure and operation of such a cell cache bus are described in the aforementioned copending European application. Through these connections, the cell interconnect moves requests and responses between the cell and a respective ring.

The ring connections of each cell interconnect collectively form an input port and an output port. In operation, each cell interconnect moves the data on its input port through two stages (comprising four latches), modifies the data as required by a given cell interconnect unit operation and presents the data on its output port. Accordingly, when a number of cell interconnects are linked in a loop, the delay stages form a shift register such as Ring A or Ring B. Each cell interconnect receives data from the previous cell interconnect in its ring and forwards data to the next. An insertion and extraction protocol described in greater detail hereinafter allows the cell interconnects to pass data between cells.

As FIGURE 4 illustrates, each cell interconnect unit (CI) is formed by two cell interconnect units (CIUs), and associated SRAMs for storing state bits. Each cell interconnect unit (CIU), in turn, is constructed from a plurality of integrated circuits. The integrated circuits which form cell interconnect unit (CIU) 72 are depicted in FIGURE 5.

The cache bus connection of the cell interconnect is a bi-directional interface. The cell interconnect receives data from the cache bus to send to the ring and places data it receives from the ring onto the cache bus to be serviced by the cache control unit or domain routing unit. The structure and operation of preferred cache control and domain routing units are described in the aforementioned copending European application.

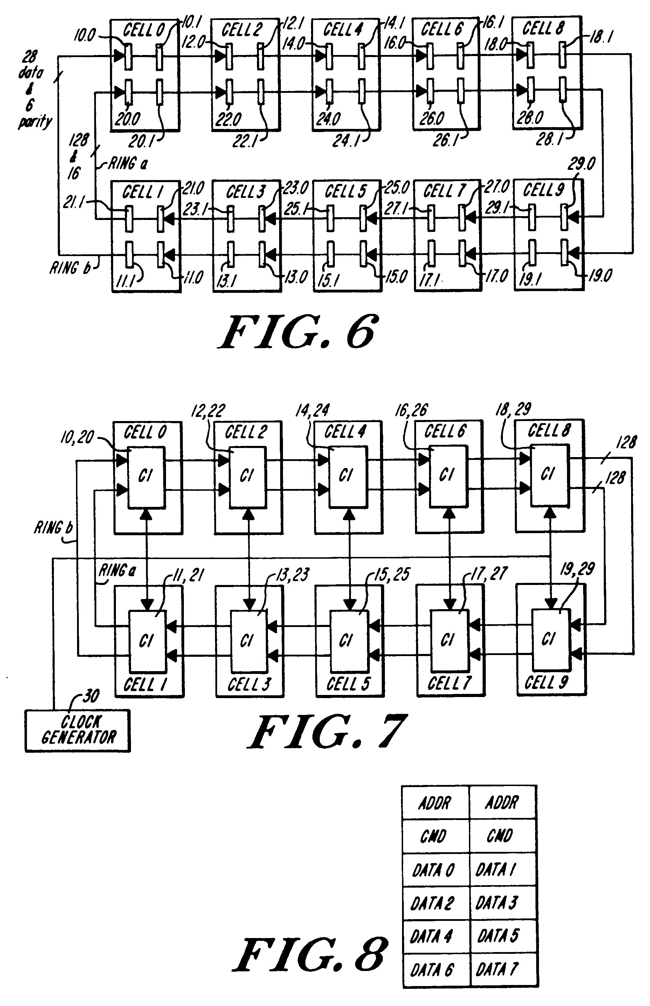

As illustrated in FIGURE 6, each cell interconnect contributes two shift register stages to the shift register structures of rings A and B. For example, a ring with ten cell interconnects, such as rings A and B shown in FIGURE 6, consists of twenty pipeline stages. Each pipeline stage is capable of selectively storing and transferring an information-representative signal representing one data word. All data words circulate through the ring by progressing, in parallel, at the rate of one stage per applied clock cycle. It is this feature of the embodiment which allows each cell to uniquely identify the source and destination of each data word on the bus, and determine appropriate processing steps for each data word. One example of a preferred clock signal distribution configuration is depicted in FIGURE 7.

In accordance with the invention, cell interconnect unit (CIU) 72 is constructed from periphery unit 80, CIU tag unit 81, SRAM control unit 82, cache bus control unit 83, CIU data path unit 84, CIU master control unit 85, and CIU directory unit 86. The integrated circuits illustrated in FIGURE 5 contain latches, FIFO buffers, multiplexors (MUXs) and other conventional logic elements.

In particular, the CIU datapath associated with CIU datapath circuit 84 is a 36 bit wide datapath including low and high cache group units, an extract FIFO and an insert FIFO. These four units collectively provide paths for (i) moving addresses from the domain interconnected by rings A and B, and from the cache bus, to the directory for address lookup, (ii) moving packets through the two pipeline stages of each CIU, (iii) moving packets from the domain to the cache bus, and (iv) moving packets from the cache bus to the domain.

The low and high cache group units direct appropriate addresses to the CIU directory circuit 86 for lookup, and provide modification of directory entries. In particular, the cache group units can pass domain, cache or recirculated addresses for lookup operations, modify directory entries, and move data from directory 86 to the associated cache bus.

The extract FIFO unit moves data from the CIU domain inputs into a holding register file, and subsequently passes the data to the associated cache bus. The insert FIFO unit moves data from the cache bus inputs into a holding register file, and subsequently passes this data to the CIU domain outputs. Additionally, the insert FIFO unit provides for modifying packets on the domain formed by rings A and B. The datapath control section associated with CIU datapath unit 84 receives commands from the master control unit 85 and converts them into command signals for use by the elements of the CIU datapath. Detailed schematics and timing diagrams for the elements of these integrated circuits are set forth in Appendix A, incorporated herein.

Top level control of the CIU 72 is managed by the CIU master control circuit 85, the SRAM control circuit 82, and the cache bus control circuit 83. The master control circuit 85 receives PACKET HEADER and EMPTY STATUS bits, and provides sequencing to the directory block to perform address lookups. The master control circuit 85 utilizes the results of these lookup operations to determine which of the PASS, EXTRACT and INSERT operations, discussed in greater detail hereinafter, is appropriate. The master control circuit 85 performs these operations based upon signals from the CIU data path circuit 84 and cache bus control circuit 83.

The SRAM control circuit 82 generates control signals for addressing the external SRAMS 70 and 71 used by the CIU 72 and illustrated in FIGURE 4. The cache bus control circuit 83 manages arbitration and flow control on the cache bus. The cache bus control circuit 83 receives command signals from the master control circuit 85, and in turn, transmits status report signals to the master control circuit 85.

Signals and Fields

As FIGURE 7 illustrates, a single domain clock signal (h,l), generated by clock generator 30, is distributed to the entire domain interconnect formed by rings A and B. Domain clock (h,l) provides 50mhz synchronous timing information to the cell interconnects within the domain interconnect formed by rings A and B.

By properly distributing domain clock (h,l), the effective clock skew for a cell interconnect such as, for example, the cell interconnect 14 corresponding to cell 4, is the clock skew between that cell interconnect's input stage 14.0 and prior adjacent cell interconnect (cell 2) and its output stage 14.1 and next adjacent cell (cell 6). An important advantage of the invention is that clock skew is not accumulative, and propagation time between cell interconnects is independent of the number of cell interconnects or stages.

The fundamental result is that the clock cycle time --i.e. the inverse of the clock frequency -- of the domain interconnect is simply the cycle time between two adjacent cell interconnects. The clock cycle time does not increase and frequency does not decrease as the number of cell interconnects is increased. Thus, as the number of cell interconnects in a ring is increased, the flux of operations through the ring is constant, while the number of bus operations which can be executed during a complete bus cycle increases linearly. This is an important feature of the invention, which is ideally suited for multiprocessor structures.

The high speed nature of a domain interconnect constructed in accordance with the invention is further enhanced by two topological factors. First, the output (i.e. second) stage of each cell interconnect drives a single load, the input stage of the adjacent cell interconnect. Second, each cell interconnect requires connection to only its two neighboring cell interconnects, allowing close proximity of all directly connected cell interconnects. This combination of absolute minimal loading and very short physical distance between adjacent cells minimizes propagation time between cell interconnects.

Those skilled in the art will understand that while the embodiment described above in connection with FIGURE 7 utilizes a synchronous clock, the invention can be practiced in connection with an asynchronous or self-timed clock configuration.

In accordance with the embodiment, data circulating through a given ring is divided into data packets of ten data words, corresponding to ten shift register ring stages. The number of shift register stages must be an exact multiple of the number of data words in a data packet. Given, for example, a ring with twenty cells and two register stages per cell, the ring consists of forty stages. Thus, four ten-word packets can be transferred simultaneously in this ring. This property is generalized below in Table I.

TABLE I

| Number of CI | Number of Stages | Number of Packets |
| --- | --- | --- |
| 5 | 10 | 1 |
| 10 | 20 | 2 |
| 15 | 30 | 3 |
| 20 | 40 | 4 |

The invention is preferably practiced in connection with the packet configuration shown in FIGURE 8. The first data word in each half is an address, the second data word is a command and the remaining data words are data, as indicated in FIGURE 8. Those skilled in the art will understand that alternative packet configurations are possible and within the scope of the invention.

In addition to the operations described above, a cell interconnect can modify the command field of a packet. For example, a cell interconnect can extract a packet by copying the packet from the ring and changing the command field to EMPTY. Alternatively, if a cell interconnect merely copies a packet, the command field would remain unchanged, allowing the packet to continue to circulate through the ring.

All packets circulate through the domain interconnect only once. This property results from an operational protocol in which each operation is created and retired by the same cell interconnect. Cells which extract a packet to add response data must later re-insert the packet.

The operations that the cell interconnect units can perform on packets thus include the following:

PASS PACKET:

The cell interconnect unit passes a packet from its ring inputs to its ring outputs without any modification if the packet specifies an address of which the cell interconnect has no knowledge.

EXTRACT PACKET:

The cell interconnect unit extracts a packet from the ring if it represents a request the cell interconnect unit made to the ring or contains an address the cell interconnect unit must act upon. When a cell interconnect unit extracts a packet from the ring it modifies the command of the packet to indicate the extraction.

SEND PACKET to the Cache Bus:

The cell interconnect unit sends each packet that it extracts from the ring to the cache bus for service by the cache controller.

RECEIVE PACKET from the Cache Bus:

The cache controller can send a packet to the cell interconnect unit for insertion into the ring. The cell interconnect unit receives these packets and retains them until they can be inserted into the ring.

INSERT PACKET:

The cell interconnect unit inserts a packet into the ring whenever it has a packet awaiting insertion and the current ring packet is marked as EMPTY.

In a preferred embodiment of the invention, the domain interconnect formed by rings A and B supports two sets of fields, referred to as the domain fields and the cell interconnect unit fields. The domain fields are established by serial connections from one cell interconnect to the next cell interconnect, which form a ring. Each cell interconnect has a separate receive and transmit port for the domain fields, as indicated in FIGURE 4. The cell interconnect unit fields provide communication among the cell interconnect units of the cell. The domain fields are summarized below in Table II:

TABLE II

DOMAIN FIELDS

DOMAIN DATA

DOMAIN ECC

DOMAIN HEADER

DOMAIN CLOCK

CIU ID

CIU CELL ADDRESS

CIU EXTRACT

The DOMAIN DATA and DOMAIN ECC fields are responsible for moving the data of ring operations. Each operation is a packet of ten domain bus transfers. The DOMAIN HEADER field marks the beginning of an operation. The DOMAIN CLOCK field provides timing for the shift register structure in cooperation with the clock generator illustrated in Figure 7. The CIU ID field identifies the type of cell interconnect unit involved in a given transfer. The CIU CELL ADDRESS field identifies the domain local address of the cell. The CIU EXTRACT field communicates information between cell interconnect units.

In operation, the DOMAIN DATA field transmits the address, command, and data information corresponding to an operation. The configuration of the DOMAIN DATA field consists first of an address, then a command, and finally eight data values, one or more of which may be empty.

The DOMAIN ECC field transmits a Hamming based error correction code (ECC) word for each domain data transfer. DOMAIN ECC is not generated or checked by the cell interconnect units, but passed unchanged to the target units.

The DOMAIN HEADER field designates a given word in the current domain data transfer as the first word of a packet.

The assertion of the DOMAIN RESET signal by the domain structure or domain power controller causes each cell interconnect and corresponding cell to enter a reset state. The reset state is described in the aforementioned copending European application.

The assertion of CELL RESET by a cell causes the corresponding cell and cell interconnect to reset. When reset, cell interconnects perform only PASS PACKET operations.

The cell interconnect unit control fields provide for communication specific to the cell interconnect units. These cell interconnect unit control fields are summarized below in Table III.

TABLE III

CIU Control Fields

CIU ID

TABLE III (continued)

CIU Control Fields

CIU EXTRACT

CIU CELL ADDRESS

THE CIU ID field for each CIU is established by the configuration of electrical connections from the CIU to power and ground terminals. This configuration establishes a unique CIU identification number for each CIU. The interpretation of the identification number depends upon whether the plural ring structure is configured in a two-way or a four-way memory interleaving mode. Normally, ring A is configured for even page addresses in memory and ring B for odd page addresses in memory. However, those skilled in the art will appreciate that the shift register structure can be configured to pass all addresses on either ring. Page address interleaving is normally configured at system configuration time by control locations in the cell interconnects. Table IV below summarizes interpretation of id numbers in the two-way interleaved mode.

TABLE IV

| TWO WAY INTERLEAVED | |
| --- | --- |
| ID VALUE | DEFINITION |
| 0 | Master CIU 1 |
| 1 | Master CIU 1 |
| 2 | Slave CIU 0 |
| 3 | Slave CIU 1 |

Table V below summarizes interpretation of id numbers in the four-way interleaved mode:

TABLE V

| FOUR WAY INTERLEAVED | |
| --- | --- |
| ID VALUE | DEFINITION |
| 0 | MASTER 0 |
| 1 | Master CIU 1 |
| 2 | Master CIU 2 |
| 3 | Master CIU 3 |

When two CIUs are partnered as master and slave, the slave cell interconnect unit drives a one-bit CIU EXTRACT signal which is read by its partner master cell interconnect unit. The CIU EXTRACT signal is asserted or de-asserted according to whether the slave CIU identifies the current operation as requiring removal from the shift register structure.

The CIU CELL ADDRESS signal represents the address within the domain of the cell asserting the signal.

In accordance with the invention, all domain interconnect transfers form a single packet. The domain interconnect formed by the plural rings is initialized to contain a fixed number of packets based on the number of cell interconnects. For example, a twenty cell domain interconnect contains eight packets per ring. Thus, in this example, eight packets per ring, or sixteen packets per domain interconnect, can be transferred in parallel.

In a preferred practice of the invention in conjunction with a multiprocessor structure like that described in the aforementioned copending European application, the cell interconnect performs two levels of interpretation in order to determine how to operate on a packet. First, the cell interconnect examines the address specified in the packet. The cell interconnect may be configured to operate as a positive or a negative filter. As a positive filter, it operates on any System Virtual Address (SVA) that has an entry in its cache descriptors. The interaction of SVA addresses and cache descriptors is further described in the aforementioned copending application. The positive filter configuration is used when a cell interconnect is connected to a cache either directly or by a remote interface. The negative filter configuration is used when the cell interconnect is connected to a router. In either configuration, the cell interconnect operates on SVA addresses directed to it.

Secondly, having recognised an address, the cell interconnect examines the command portion of the packet to determine if it can modify the response field of the command and allow the packet to proceed, or whether it must extract the packet from the domain interconnect.

A cell interconnect can insert a packet into the ring when an empty packet arrives. An empty packet is indicated by an IDLE operation type in the command word of the packet. Evenly distributed usage of the packets of the ring is provided by the embodiment because no cell interconnect can use a packet that it has just emptied by an extraction operation. In order to perform an insertion, the cell interconnect must place its operation into the ten consecutive stages of the empty packet.

It will be understood that given the plural ring structure of the invention, the cell interconnect which initially injects a particular operation into the ring will eventually receive that operation back. At that time, the cell interconnect destroys the operation by changing the command word to IDLE. Any cell interconnect that removes an operation it did not create must return that operation to the ring.

A cell interconnect extracts an operation from the ring by copying its contents from the ten consecutive stages of its packet and writing the IDLE operation type into the command word of the packet. Any cell interconnect that extracts an operation it did not create must return that operation to the ring.

The bus structures are initialized in two steps. First, the domain stages are formatted into ten word packets by initializing the domain header signal. Secondly, each packet is initialized to an IDLE state. If the number of stages in either ring is not an even multiple of ten stages, or if the circular path is logically broken, the ring will not initialize.

In a preferred embodiment of the invention, bus initialization is performed by software, with cell interconnect assist. Within each cell interconnect is a DOMAIN HEADER STATUS bit which indicates whether the domain is properly formatted by verification of the DOMAIN HEADER signal. If the DOMAIN HEADER STATUS bit indicates that a given ring is improperly formatted, then a SETUP DOMAIN command issued by a given cell to a cell interconnect performs domain initialization.

It will thus be seen that the invention efficiently attains the objects set forth above, among those made apparent from the preceding description. It will be understood that changes may be made in the above construction and in the foregoing sequences of operation. It is accordingly intended that all matter contained in the above description or shown in the accompanying drawings be interpreted as illustrative rather than in a limiting sense.

It is also understood that the following claims are intended to cover all of the generic and specific features of the invention as described herein, and all statements of the scope of the invention which, as a matter of language, might be said to fall therebetween.

Where technical features mentioned in any claim herein are followed by reference symbols, those reference symbols are included solely for the purpose of increasing the intelligibility of the claims.

## Claims

1. A digital data processing apparatus of the type having:

   A) bus means (RING A; RING B) for transferring packets (Fig. 8), each packet comprising a plurality of multiple-bit words, said bus means including shift register means comprising a series of digital storage and transfer stages (10.0 - 29.1) connected in a ring configuration for sequentially storing and transferring said packets, wherein each said stage within said shift register means includes means for storing at least one said word, and
   B) a plurality of processing cells (0-3), each processing cell including:

       i) an associated memory means (40) for storing information; and
       ii) cell interconnect means (10-13) connected to an associated subset of said stages and said associated memory means, the cell interconnect means including packet transfer control means (62, 63, 72, 73) arranged to selectively perform:

           1) a transfer operation to enable said associated subset of said stages to transfer a packet received from a said stage associated with the previous processing cell to a said stage associated with the next processing cell, and
           2) an extracting operation to enable said associated subset of stages to transfer a packet received from a said stage associated with the previous processing cell to the memory means (40) associated with its processing cell;

       characterised in that

C) all of said stages are connected in a unitary ring configuration; and

D) said packet transfer control means (62; 63; 72; 73) is arranged to selectively perform either or both of

a) a replicating operation which transfers an information-representative signal in said packet to a said stage associated with the next processing cell and contemporaneously copies the information-representative signal to the memory means associated with its processing cell and

b) a modification operation which modifies the packet as required by a given cell interconnect operation to either insert new packet information or respond to an extraction operation.

2. A digital data processing apparatus as defined in claim 1 further characterised in that each said cell interconnect means is connected to at least two serially-connected ones of said plurality of said stages.

3. A digital data processing apparatus as defined in claim 1 further characterised in that said packet transfer control means selectively performs said transfer, extracting and replicating operations in connection with a said packet while at least a portion of that packet (Fig. 8) is stored within said associated subset of stages (10.0 - 29.1).

4. A digital data processing apparatus as defined in claim 1 further characterised in that said cell interconnect means (10 - 13) including means (62; 63; 72; 73) responsive to applied digital clock (30) cycle signals (DMNX_CLK50_x) for simultaneously transferring at least a selected digital signal packet (Fig. 8) through successive stages of said associated subset of stages (10.0 - 29.1), at a rate responsive to said digital clock (30) cycle rate.

5. A digital data processing apparatus as defined in claim 1 further characterised in that said cell interconnect means further selectively performs a modifying operation for modifying at least some of the information in a packet received from a said stage associated with another of said processing cells, and thereafter enabling its associated subset of stages to transfer the packet to a said digital storage and transfer stage associated with yet another of said processing cells.

6. A digital data processing apparatus according to claim 5, wherein

said packet transfer control means (62;63:72;73) is arranged to selectively perform said at least one of modifying, extracting, replicating and transferring operations on said same digital signal packet (Figure 8), based on an association, if any, between information in the packet (Figure 8) and information stored in said associated memory means (40).

7. A digital data processing apparatus according to claim 6, wherein said at least one processing cell (0 - 3) includes

A. directory means (86) for storing signals representative of information stored in said associated memory means (40),

B. means coupled with said cell interconnect means (10 - 13) and with said directory means (86) for generating a cell interconnect control signal based on a comparison of said said directory means (86), and

C. said cell interconnect means (10 - 13) includes means selectively responsive to said cell interconnect control signal for performing said at least one modifying, extracting, replicating and transferring operation on said digital signal packet (Figure 8).

8. A data processing apparatus according to any of claims 1-7, wherein said at least one processing cell (0 - 3) includes

A. means for generating and transmitting to the associated cell interconnect means (10 - 13) a cell interconnect control signal representative of a packet store request, and

B. said associated cell interconnect means (10 - 13) includes means responsive to said packet store request signal for storing a selected information signal to an associated stage (10.0 - 29.1) of said shift register means.

9. A data processing apparatus according to any of claims 1-7, wherein said at least one processing cell (0 - 3) includes

A. means for generating and transmitting to the associated cell interconnect means (10 - 13) a cell interconnect control signal representative of a packet access request, and

B. said associated cell interconnect means (10 - 13) includes means responsive to said packet access request signal for providing said processing cell (0 - 3) access to information stored in an associated stage (10.0 - 29.1) of said shift register means.

10. A data processing apparatus according to any of claims 1-8, wherein said at least one processing cell (0 - 3) includes

    A. means for generating and transmitting to the associated cell interconnect means (10 - 13) a cell interconnect control signal representative of a packet extraction request, and
    B. said associated cell interconnect means (10 - 13) includes means responsive to said packet extraction request signal for extracting information stored in an associated stage (10.0 - 29.1) of said shift register means and for transferring that extracted information to said associated processing cell (0 - 3).

11. A data processing apparatus according to any of claims 1-7, wherein said at least one processing cell (0 - 3) includes

    A. means for generating and transmitting to the associated cell interconnect means (10 - 13) a cell interconnect control signal representative of a packet replication request, and
    B. said associated cell interconnect means (10 - 13) includes means responsive to said packet replication request signal for replicating information stored in an associated stage (10.0 - 29.1) of said shift register means and for transferring that replicated information to said associated processing cell (0 - 3).

12. A data processing apparatus according to any of claims 1-7, wherein said at least one processing cell (0 - 3) includes

    A. means for generating and transmitting to the associated cell interconnect means (10 - 13) a cell interconnect control signal representative of a packet transfer request, and
    B. said associated cell interconnect means (10 - 13) includes means responsive to said packet transfer request signal for transferring unchanged information stored in a first associated stage (10.0 - 29.1) of said shift register means to a second, succeeding associated stage (10.0 - 29.1) of said shift register means.

13. A data processing apparatus according to any of claims 1-7, wherein said at least one processing cell (0 - 3) includes

    A. means for generating and transmitting to the associated cell interconnect means (10 - 13) a cell interconnect control signal representative of a packet identify request, and
    B. said associated cell interconnect means (10 - 13) includes means responsive to said packet identify request signal to identify information stored in an associated stage (10.0 - 29.1) of said shift register means as the first information signal of a digital signal packet (Figure 8).

14. A digital data processing apparatus according to claim 13, wherein said cell interconnect means (10 - 13) includes

    A. means for generating and transmitting to the associated cell interconnect means (10 - 13) a cell interconnect control signal representative of a packet identify command, and
    B. said cell interconnect means (10 - 13) includes means responsive to said packet identify command signal for setting information stored in an associated stage (10.0 - 29.1) of said shift register to a selected value identifying that information signal as the first such signal in a digital signal packet (Figure 8).

15. A digital data processing apparatus according to any of claims 1-7, wherein said cell interconnect includes means for assembling a digital signal packet (Figure 8) including information comprising an address, a command, and data.

16. A digital data processing apparatus according to claims 1-7, wherein said shift register means includes

    A. means (10) for storing a given digital word in a first stage (10.0 - 29.1) of said shift register means, and
    B. means (10) responsive to said applied digital clock (30) signal (DMNx_CLK50_x) for transferring said digital word wored in said first stage (10.0 - 29.1) to a succeeding stage (10.0 - 29.1) of said shift register means.

17. A digital data processing apparatus according to claim 16 wherein

a given digital word is resident in said subset of stages (10.0 - 29.1) associated with said cell interconnect means (10 - 13) for N applied digital clock (30) cycles.

18. A digital data processing apparatus according to claim 17, wherein said shift register means includes means (10.0 - 29.1) for simultaneously transferring to successive said stages p digital signal packets (Figure 8), where p is a positive integer given by

$$p = cN/w$$

where c is the number of said cell interconnect means (10 - 13) connected to said bus means (RING A; RING B) and w is the number of digital words in each digital signal packet (Figure 8).

19. A digital data processing apparatus according to claim 17, wherein as the number of stages (10.0 - 29.1) of said shift register means increases, the flux of said digital words through said stages of said shift register means remains constant.

20. A digital data processing apparatus according to claim 17, wherein clock (30) cycle skew associated with said at least one set of digital clock (30) cycles remains substantially constant with reference to each of said N stages (10.0 - 29.1) of said shift register means as the number N increases.

21. A digital data processing apparatus according to any of claims 1-7, wherein said cell interconnect means (10 - 13) includes at least one of

A. insert buffer means for storing at least a selected digital signal packet (Figure 8) for transfer to at least one stage (10.0 - 29.1) of said associated subset of stages (10.0 - 29.1) for insertion into said shift register means, and
B. second buffer means for storing at least a selected digital signal packet (Figure 8) extracted from said associated subset of stages (10.0 - 29.1).

**Patentansprüche**

1. Digitale Datenverarbeitungsvorrichtung des Typs mit:

A) einer Buseinrichtung (RING A; RING B) zum Übergeben von Paketen (Fig. 8), wobei jedes Paket eine Vielzahl von Mehrbitwörtern umfaßt, wobei die Buseinrichtung eine Schieberegistereinrichtung beinhaltet, die eine Reihe von digitalen Speicher- und Übergabestufen (10.0 - 29.1), die in einer Ringkonfiguration verbunden sind, zum sequentiellen Speichern und Übergeben der Pakete umfaßt, wobei jede Stufe in der Schieberegistereinrichtung eine Einrichtung zum Speichern wenigstens eines Wortes beinhaltet, und
B) einer Mehrzahl von Verarbeitungszellen (0-3), wobei jede Verarbeitungszelle beinhaltet;

i) eine zugehörige Speichereinrichtung (40) zum Speichern von Information und
ii) eine Zellenverbindungseinrichtung (10-13), die mit einer zugehörigen Untermenge der Stufen und der zugehörigen Speichereinrichtung verbunden ist, wobei die Zellenverbindungseinrichtung eine Steuereinrichtung (62, 63, 72, 73) für die Paketübergabe beinhaltet, die so angeordnet ist, daß sie selektiv ausführt:

1) eine Übergabeoperation, um die zugehörige Untermenge von Stufen zu befähigen, ein von einer zur vorhergehenden Verarbeitungszelle gehörigen Stufe empfangenes Paket an eine Stufe zu übergeben, die zur nächsten Verarbeitungszelle gehört, und
2) eine Auswahloperation, um die zugehörige Untermenge von Stufen zu befähigen, ein von einer zur vorherigen Verarbeitungszelle gehörigen Stufe empfangenes Paket an die zu seiner Verarbeitungszelle gehörigen Speichereinrichtung (40) zu übergeben;

dadurch gekennzeichnet, daß
C) alle Stufen in einer einheitlichen Ringkonfiguration verbunden sind und
D) die Steuereinrichtung (62; 63; 72; 73) für die Paketübergabe so angeordnet ist, daß sie selektiv die eine oder beide der folgenden Operationen ausführt:

a) eine Wiederholungsoperation, die ein eine Information darstellendes Signal im Paket an die zur nächsten Verarbeitungszelle gehörigen Stufe übergibt und gleichzeitig das eine Information darstellende Signal in die zu seiner Verarbeitungszelle gehörige Speichereinrichtung kopiert, und

b) eine Modifikationsoperation, die das Paket wie durch eine gegebene Zellenverbindungsoperation gefordert so modifiziert, daß sie entweder eine neue Paketinformation einsetzt oder auf eine Auswahloperation reagiert.

2. Digitale Datenverarbeitungsvorrichtung nach Anspruch 1, weiterhin dadurch gekennzeichnet, daß jede Zellenverbindungseinrichtung mit wenigstens zwei seriell verbundenen der Mehrzahl von Stufen verbunden ist.

3. Digitale Datenverarbeitungsvorrichtung nach Anspruch 1, weiterhin dadurch gekennzeichnet, daß die Steuereinrichtung für die Paketübergabe selektiv die Übergabe-, Auswahl- und Wiederholungsoperationen in Verbindung mit einem Paket ausführt, während wenigstens ein Teil des Pakets (Fig. 8) in der zugehörigen Untermenge von Stufen (10.0 - 29.1) gespeichert ist.

4. Digitale Datenverarbeitungsvorrichtung nach Anspruch 1, weiterhin dadurch gekennzeichnet, daß die Zellen-63; 72; 73) umfaßt, die auf angelegte digitale Zyklussignale (DMNX_CLK50_x) eines Taktgebers (30) reagieren, um wenigstens ein ausgewähltes digitales Signalpaket (Fig. 8) über aufeinanderfolgende Stufen an die zugehörige Untermenge von Stufen (10.0 - 29.1) mit einer Rate zu übergeben, die auf die digitale Zyklusrate des Taktgebers (30) reagiert.

5. Digitale Datenverarbeitungsvorrichtung nach Anspruch 1, weiterhin dadurch gekennzeichnet, daß die Zellenverbindungseinrichtung weiterhin selektiv eine Modifizierungsoperation ausführt, um wenigstens etwas der Information in einem Paket, das von einer zu einer anderen der Verarbeitungszellen gehörigen Stufe empfangen wird, zu modifizieren und danach ihre zugehörige Untermenge von Stufen zu befähigen, das Paket an eine zu noch einer anderen Verarbeitungszelle gehörigen digitalen Speicher- und Übergabestufe zu übergeben.

6. Digitale Datenverarbeitungsvorrichtung nach Anspruch 5, bei der die Steuereinrichtung (62; 63; 72; 73) für die Paketübergabe so angeordnet ist, daß sie selektiv wenigstens eine der Modifizierungs-, Auswahl-, Wiederholungs- und Übergabeoperationen auf demselben digitalen Signalpaket (Fig. 8) auf der Basis einer Verbindung, wenn überhaupt einer, zwischen Information im Paket (Fig. 8) und Information, die in der zugehörigen Speichereinrichtung (40) gespeichert ist, ausführt.

7. Digitale Datenverarbeitungsvorrichtung nach Anspruch 6, bei der wenigstens eine Verarbeitungszelle (0 - 3) umfaßt

A. eine Verzeichnungseinrichtung (86) zum Speichern von Signalen, die in der zugehörigen Speichereinrichtung (40) gespeicherte Information darstellen,

B. eine Einrichtung, die an die Zellenverbindungseinrichtung (10 - 13) und die Verzeichniseinrichtung (86) gekoppelt ist, zum Erzeugen eines Steuersignals für die Zellenverbindung auf der Basis eines Vergleichs der Verzeichniseinrichtung (86) und

C. die Zellenverbindungseinrichtung (10 - 13) eine Einrichtung, die selektiv auf das Steuersignal für die Zellenverbindung antwortet, zum Ausführen der wenigstens einen Modifizierungs-, Auswahl-, Wiederholungs- und Übertragungsoperation auf dem digitalen Signalpaket (Fig. 8) umfaßt.

8. Datenverarbeitungsvorrichtung nach einem der Ansprüche 1 bis 7, bei der die wenigstens eine Verarbeitungszelle (0 - 3) beinhaltet

A. eine Einrichtung zum Erzeugen und Übertragen eines Steuersignals für die Zellenverbindung, das eine Anforderung zur Paketspeicherung darstellt, zur zugehörigen Zellenverbindungseinrichtung (10 - 13) und

B. die zugehörige Zellenverbindungseinrichtung (10 - 13) eine Einrichtung beinhaltet, die auf das Anforderungssignal zur Paketspeicherung reagiert, um ein ausgewähltes Informationssignal in einer zugehörigen Stufe (10,0 - 29.1) der Schieberegistereinrichtung zu speichern.

9. Datenverarbeitungsvorrichtung nach einem der Ansprüche 1 bis 7, bei der die wenigstens eine Verarbeitungszelle (0 - 3) beinhaltet

A. eine Einrichtung zum Erzeugen und Übertragen eines Steuersignals für die Zellenverbindung, das eine Anforderung für den Zugang zum Paket darstellt, zur zugehörigen Zellenverbindungseinrichtung (10 - 13) und

B. die zugehörige Zellenverbindungseinrichtung (10 - 13) eine Einrichtung beinhaltet, die auf das Anforderungssignal für den Zugang zum Paket reagiert, um der Verarbeitungszelle (0 - 3) Zugang zu in einer zugehörigen Stufe (10.0 - 29.1) der Schieberegistereinrichtung gespeicherten Information zu verschaffen.

**10.** Datenverarbeitungsvorrichtung nach einem der Ansprüche 1 bis 8, bei der die wenigstens eine Verarbeitungszelle (0 - 3) beinhaltet

A. eine Einrichtung zum Erzeugen und Übertragen eines Steuersignals für die Zellenverbindung, das eine Anforderung für die Paketauswahl darstellt, zur zugehörigen Zellenverbindungseinrichtung (10 - 13) und
B. die zugehörige Zellenverbindungseinrichtung (10 - 13) eine Einrichtung beinhaltet, die auf das Anforderungssignal für die Paketauswahl reagiert, um in einer zugehörigen Stufe (10.0 - 29.1) der Schieberegistereinrichtung gespeicherte Information auszuwählen und diese ausgewählte Information an die zugehörigen Verarbeitungszelle (0 - 3) zu übergeben.

**11.** Datenverarbeitungsvorrichtung nach einem der Ansprüche 1 bis 7, bei der die wenigstens eine Verarbeitungszelle (0 - 3) beinhaltet

A. eine Einrichtung zum Erzeugen und Übertragen eines Steuersignals für die Zellenverbindung, das eine Anforderung für die Paketwiederholung darstellt, zur zugehörigen Zellenverbindungseinrichtung (10 - 13) und
B. die zugehörige Zellenverbindungseinrichtung (10 - 13) eine Einrichtung beinhaltet, die auf das Anforderungssignal für die Paketwiederholung reagiert, um in einer zugehörigen Stufe (10.0 - 29.1) der Schieberegistereinrichtung gespeicherte Information zu wiederholen und diese wiederholte Information an die zugehörige Verarbeitungszelle (0 - 3) zu übergeben.

**12.** Datenverarbeitungsvorrichtung nach einem der Ansprüche 1 bis 7, bei der die wenigstens eine Verarbeitungszelle (0 - 3) beinhaltet

A. eine Einrichtung zum Erzeugen und Übertragen eines Steuersignals für die Zellenverbindung, das eine Anforderung für die Paketübergabe darstellt, zur zugehörigen Zellenverbindungseinrichtung (10 - 13) und
B. die zugehörige Zellenverbindungseinrichtung (10 - 13) eine Einrichtung beinhaltet, die auf das Anforderungssignal für die Paketübergabe reagiert, um in einer zugehörigen Stufe (10.0 - 29.1) der Schieberegistereinrichtung gespeicherte, ungeänderte Information an eine zweite nachfolgende zugehörige Stufe (10.0 - 29.1) der Schieberegistereinrichtung zu übergeben.

**13.** Datenverarbeitungsvorrichtung nach einem der Ansprüche 1 bis 7, bei der die wenigstens eine Verarbeitungszelle (0 - 3) beinhaltet

A. eine Einrichtung zum Erzeugen und Übertragen eines Steuersignals für die Zellenverbindung, das eine Anforderung zur Paketidentifizierung darstellt, zur zugehörigen Zellenverbindungseinrichtung (10 - 13) und
B. die zugehörige Zellenverbindungseinrichtung (10 - 13) eine Einrichtung beinhaltet, die auf das Anforderungssignal Paketidentifizierung reagiert, um in einer zugehörigen Stufe (10.0 - 29.1) der Schieberegistereinrichtung gespeicherte Information als das erste Informationssignal eines digitalen Signalpakets (Fig. 8) zu identifizieren.

**14.** Digitale Datenverarbeitungsvorrichtung nach Anspruch 13, bei der die Zellenverbindungseinrichtung (10 - 13) beinhaltet

A. eine Einrichtung zum Erzeugen und Übertragen eines Steuersignals für die Zellenverbindung, das eine Befehl zur Paketidentifizierung darstellt, zur zugehörigen Zellenverbindungseinrichtung (10 - 13) und
B. die zugehörige Zellenverbindungseinrichtung (10 - 13) eine Einrichtung beinhaltet, die auf das Befehlssignal zur Paketidentifizierung reagiert, um in einer zugehörigen Stufe (10.0 - 29.1) des Schieberegisters gespeicherte Information auf einen ausgewählten Wert zu setzen, der dieses Informationssignal als das erste solche Signal in einem digitalen Signalpaket identifiziert (Fig. 8).

**15.** Digitale Datenverarbeitungsvorrichtung nach einem der Ansprüche 1 bis 7, bei der die Zellenverbindung eine Einrichtung zum Assemblieren eines digitalen Signalpakets umfaßt (Fig. 8), das Information beinhaltet, die eine Adresse, einen Befehl und Daten umfaßt.

**16.** Digitale Datenverarbeitungsvorrichtung nach den Ansprüchen 1 bis 7, bei der die Schieberegistereinrichtung beinhaltet

A. eine Einrichtung (10) zum Speichern eines gegebenen digitalen Worts in einer ersten Stufe (10.0 - 29.1) der Schieberegistereinrichtung und

B. eine Einrichtung (10), die auf das angewendete digitale Signal (DMNx_CLK50_x) des Taktgebers (30) reagiert, um das in der ersten Stufe (10.0 - 29.1) gespeicherte digitale Wort an eine nachfolgende Stufe (10.0 - 29.1) der Schieberegistereinrichtung zu übergeben.

**17.** Digitale Datenverarbeitungsvorrichtung nach Anspruch 16, bei der ein gegebenes digitales Wort in der Untermenge von Stufen (10.0 - 29.1), die zu der Zellenverbindungseinrichtung (10 - 13) gehören, für N angewendete digitale Zyklen des Taktgebers (30) resident ist.

**18.** Digitale Datenverarbeitungsvorrichtung nach Anspruch 17, bei der die Schieberegistereinrichtung eine Einrichtung (10.0 - 29.1) zum gleichzeitigen Übergeben von p digitalen Signalpaketen an aufeinanderfolgende Stufen (Fig. 8), wobei p eine positive ganze Zahl ist, die durch

$$p = cN/w$$

gegeben ist, worin c die Anzahl der Zellenverbindungseinrichtungen (10 - 13), die mit der Buseinrichtung (RING A; RING B) verbunden sind, und die w die Anzahl von digitalen Wörtern in jedem digitalen Signalpaket ist (Fig. 8).

**19.** Digitale Datenverarbeitungsvorrichtung nach Anspruch 17, bei der der Fluß der digitalen Wörter durch die Stufen der Schieberegistereinrichtung konstant bleibt, wenn sich die Anzahl von Stufen (10.0 -29.1) der Schieberegistereinrichtung erhöht.

**20.** Digitale Datenverarbeitungsvorrichtung nach Anspruch 17, bei der der Zyklusversatz des Taktgebers (30), der zu dem wenigstens einen Satz von digitalen Zyklen des Taktgebers (30) gehört, bezüglich jeder der N Stufen (10.0 - 29.1) der Schieberegistereinrichtung im wesentlichen konstant bleibt, wenn sich die Zahl N erhöht.

**21.** Digitale Datenverarbeitungsvorrichtung nach einem der Ansprüche 1 bis 7, bei der die Zellenverbindungseinrichtung (10 - 13) wenigstens eine der folgenden umfaßt:

A. eine Einsetzpuffereinrichtung zum Speichern wenigstens eines ausgewählten digitalen Signalpakets (Fig. 8) zur Übergabe an wenigstens eine Stufe (10.0 - 29.1) der zugehörigen Untermenge von Stufen (10.0 - 29.1) zum Einsetzen in die Schieberegistereinrichtung und

B. eine zweite Puffereinrichtung zum Speichern wenigstens eines ausgewählten digitalen Signalpakets (Fig. 8), das aus der zugehörigen Untermenge von Stufen (10.0 - 29.1) ausgewählt wird.

**Revendications**

**1.** Dispositif de traitement de données numériques du type comportant :

A) des moyens formant bus (RING A, RING B) pour le transfert de paquets (figure 8), chaque paquet comprenant une pluralité de mots à bits multiples, lesdits moyens formant bus comprenant des moyens formant registres à décalage comportant une série d'étages de mémorisation et de transfert numérique (10.0-29.1) connectés selon une configuration en anneau et servant à mémoriser et transférer séquentiellement lesdits paquets, dans lequel chacun desdits étages à l'intérieur desdits moyens formant registres à décalage comprend des moyens pour mémoriser au moins l'un desdits mots, et

B) une pluralité de cellules de traitement (0-3), chaque cellule de traitement comprenant :

i) des moyens de mémoire associés (40) pour mémoriser une information ; et

ii) des moyens (10-13) d'interconnexion de cellules, connectés à un sous-ensemble associé desdits étages et auxdits moyens de mémoire associés, les moyens d'interconnexion de cellules comprenant des moyens (62,63,72,73) de commande de transfert de paquets agencés de manière à effectuer sélectivement:

1) une opération de transfert pour permettre audit sous-ensemble associé desdits étages de transférer un paquet reçu depuis un étage associé à ladite cellule de traitement précédente, à un étage associé à la cellule de traitement suivante, et

2) une opération d'extraction pour valider ledit sous-ensemble associé d'étages pour le transfert d'un paquet reçu depuis ledit étage associé à ladite cellule de traitement précédente, aux moyens de mémoire (40) associés à leur cellule de traitement ;

caractérisé en ce que

C) l'ensemble desdits étages sont connectés selon une configuration en anneau unitaire ; et

D) lesdits moyens (62;63;72;73) de commande de transfert de paquets sont agencés de manière à effectuer sélectivement l'une ou l'autre ou les deux opérations suivantes :

a) une opération de reproduction qui transfère un signal représentant une information dans ledit paquet audit étage associé à la cellule de traitement suivante, et copie simultanément le signal représentatif d'une information dans les moyens de mémoire associés à leur cellule de traitement, et

b) une opération de modification qui modifie le paquet comme cela est requis au moyen d'une opération donnée d'interconnexion de cellules pour insérer une nouvelle information de paquet ou répondre à une opération d'extraction.

2. Dispositif de traitement de données numériques selon la revendication 1, caractérisé en outre en ce que chacun desdits moyens d'interconnexion de cellules est connecté à au moins deux étages connectés en série, faisant partie de ladite pluralité desdits étages.

3. Dispositif de traitement de données numériques selon la revendication 1, caractérisé en ce que lesdits moyens de commande de transfert de paquets exécute sélectivement lesdites opérations de transfert, d'extraction et de reproduction en liaison avec un paquet, tandis qu'au moins une partie de ce paquet (figure 8) est mémorisée dans ledit sous-ensemble associé d'étages (10.0-29.1).

4. Dispositif de traitement de données numériques selon la revendication 1, caractérisé en outre en ce que lesdits moyens (10-3) d'interconnexion de cellules comprenant des moyens (62;63;72;73) aptes à répondre à un signal d'horloge numérique appliqué (3), commandent de façon cyclique les signaux (DMNX_CLK50_x) pour transférer simultanément au moins un paquet de signaux numériques sélectionné (figure 8) au moyen d'étages successifs dudit sous-ensemble associé d'étages (10.0-29.1), à une cadence correspondant à ladite cadence de commande cyclique du signal d'horloge numérique (30).

5. Dispositif de traitement de données numériques selon la revendication 1, caractérisé en outre en ce que lesdits moyens d'interconnexion de cellules exécutent en outre sélectivement une opération de modification pour modifier au moins une partie de l'information contenue dans un paquet reçu dudit étage associé à une autre desdites cellules de traitement, et permettre ensuite à son sous-ensemble associé d'étages de transférer le paquet audit étage de mémoire à transfert numérique associé à une autre desdites cellule de traitement.

6. Dispositif de traitement de données numériques selon la revendication 5, dans lequel

lesdits moyens (62;63;72;73) de commande de transfert de paquets sont agencés de manière à exécuter sélectivement ladite au moins une d'opérations de modification, d'extraction, de reproduction et de transfert appliquées audit même paquet de signaux numériques (figure 8) sur la base d'une association, si elle existe, entre une information contenue dans le paquet (figure 8) et une information mémorisée dans lesdits moyens de mémoire associés (40).

7. Dispositif de traitement de données numériques selon la revendication 6, dans lequel ladite au moins une cellule de traitement (0-3) comprend

A. des moyens formant répertoire (86) pour mémoriser des signaux représentatifs d'une information mémorisée dans lesdits moyens de mémoire associés (40),

B. des moyens couplés auxdits moyens (10-13) d'interconnexion de cellules et auxdits moyens formant répertoire (86) pour produire un signal de commande d'interconnexion de cellules sur la base d'une comparaison desdits moyens formant répertoire (86), et

C. lesdits moyens (10-13) d'interconnexion de cellules comprennent des moyens aptes à répondre sélectivement audit signal de commande d'interconnexion de cellules pour effectuer ladite au moins une opération de modification, d'extraction, de reproduction et de transfert appliquée audit paquet de signaux numérique (figure 8).

8. Dispositif de traitement de données numériques selon l'une quelconque des revendications 1-7, dans lequel ladite au moins une cellule de traitement (0-3) comprend

A. des moyens pour produire et transmettre aux moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande de mémorisation de paquet pour mémoriser un signal d'information sélectionné dans un étage associé (10.0-29.1) desdits moyens formant registres à décalage.

9. Dispositif de traitement de données selon l'une quelconque des revendications 1-7, dans lequel ladite au moins une cellule de traitement (0-3) comprend

A. des moyens pour produire et transmettre aux moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande d'accès de paquet pour permettre l'accès auxdites cellules de traitement (0-3) à une information mémorisée dans un étage associé (10.0-29.1) desdits moyens formant registres à décalage.

10. Dispositif de traitement de données selon l'une quelconque des revendications 1-8, dans lequel ladite au moins une cellule de traitement (0-3) comprend

A. des moyens pour produire et transmettre aux moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande d'extraction de paquet pour l'extraction d'une information mémorisée dans un étage associé (10.0-29.1) desdits moyens formant registres à décalage et pour transférer l'information extraite à ladite cellule de traitement associée (0-3).

11. Dispositif de traitement de données selon l'une quelconque des revendications 1-7, dans lequel ladite au moins une cellule de traitement (0-3) comprend

A. des moyens pour produire et transmettre aux moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande de reproduction de paquet pour la reproduction d'une information mémorisée dans un étage associé (10.0-29.1) desdits moyens formant registres à décalage et pour transférer l'information reproduite à ladite cellule de traitement associée (0-3).

12. Dispositif de traitement de données selon l'une quelconque des revendications 1-7, dans lequel ladite au moins une cellule de traitement (0-3) comprend

A. des moyens pour produire et transmettre auxdits moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande de transfert de paquet pour transférer une information inchangée mémorisée dans un premier étage associé (10.0-29.1) desdits moyens formant registres à décalage à un second étage associé suivant (10.0-29.1) desdits moyens formant registres à décalage.

13. Dispositif de traitement de données selon l'une quelconque des revendications 1-7, dans lequel ladite au moins une cellule de traitement (0-3) comprend

A. des moyens pour produire et transmettre auxdits moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de demande d'identification de paquet pour identifier une information mémorisée dans un étage associé (10.0-29.1) desdits moyens formant registres à décalage en tant que premier signal d'information d'un paquet de signaux numériques (figure 8).

**14.** Dispositif de traitement de données numériques selon la revendication 13, dans lequel lesdits moyens (10-13) d'interconnexion de cellules comprennent

A. des moyens pour produire et transmettre auxdits moyens associés (10-13) d'interconnexion de cellules, un signal de commande d'interconnexion de cellules représentatif d'une demande de mémorisation de paquet, et
B. lesdits moyens associés (10-13) d'interconnexion de cellules comprennent des moyens aptes à répondre audit signal de commande d'identification de paquet pour régler une information mémorisée dans un étage associé (10.0-29.1) dudit registre à décalage identifiant ce signal d'information en tant que premier signal de ce type dans un paquet de signaux numériques (figure 8).

**15.** Dispositif de traitement de données numériques selon l'une quelconque des revendications 1-7, dans lequel lesdits moyens d'interconnexion de cellules comprennent des moyens pour assembler un paquet de signaux numériques (figure 8) incluant une information comprenant une commande et des données.

**16.** Dispositif de traitement de données numériques selon les revendications 1-7, dans lequel lesdits moyens formant registres à décalage comprennent

A. des moyens (10) pour mémoriser un mot numérique donné dans un premier étage (10.0-29.1) desdits moyens formant registres à décalage, et
B. des moyens (10) aptes à répondre audit signal d'horloge numérique appliqué (30) (DMNx_CLK50_x) pour transférer ledit mot numérique mémoriser dans ledit premier étage (10.0-29.1) à un étage suivant (10.0-29.1) desdits moyens formant registres à décalage.

**17.** Dispositif de traitement de données numériques selon la revendication 16, dans lequel

un mot numérique donné réside dans ledit sous-ensemble d'étages (10.0-29.1) associés auxdits moyens (10-13) d'interconnexion de cellules pour N cycles du signal d'horloge numérique appliqué (30).

**18.** Dispositif de traitement de données numériques selon la revendication 17, dans lequel lesdits moyens formant registres à décalage comprennent des moyens (10.0-29.1) pour le transfert simultané, auxdits étages successifs, de p paquets de signaux numériques (figure 8), p étant un entier positif défini par :

$$p = cN/w$$

c étant le nombre desdits moyens (10-13) d'interconnexion de cellules, qui sont connectés auxdits moyens formant bus (RING A, RING B), et w étant le nombre de mots numériques dans chaque paquet de signaux numériques (figure 8).

**19.** Dispositif de traitement de données numériques selon la revendication 17, dans lequel lorsque le nombre d'étages (10.0-29.1) desdits moyens formant registres à décalage augmente, le flux desdits mots numériques dans lesdits étages desdits moyens formant registres à décalage reste constant.

**20.** Dispositif de traitement de données numériques selon la revendication 17, dans lequel un biais du cycle du signal d'horloge (30) associé audit au moins un ensemble de cycles de signaux d'horloge numériques (30) reste sensiblement constant en référence à chacun desdits N étages (10.0-29.1) desdits moyens formant registres à décalage lorsque le nombre N augmente.

**21.** Dispositif de traitement de données numériques selon l'une quelconque des revendications 1-7, dans lequel lesdits moyens (10-13) d'interconnexion de cellules comprennent au moins

A. des moyens formant tampon d'insertion pour mémoriser au moins un paquet sélectionné de signaux numériques (figure 8) pour leur transfert à au moins un étage (10.0-29.1) dudit sous-ensemble associé d'étages (10.0-29.1) pour leur insertion dans lesdits moyens formant registres à décalage, et
B. des seconds moyens formant tampon pour mémoriser au moins un paquet sélectionné de signaux numériques (figure 8) extrait dudit sous-ensemble associé d'étages (10.0-29.1).

CELL
PROCESSOR
AND MEMORY ~2

DOMAIN 0

8 — CELL ~12
INTERCONNECT ← RING B

3 13 ~10 0

CELL
PROCESSOR
AND MEMORY

CELL
INTERCONNECT

CELL
INTERCONNECT

CELL
PROCESSOR
AND MEMORY

~11
CELL
INTERCONNECT

CELL
PROCESSOR
AND MEMORY ~1

*FIG. 1*

10 12 14 16 18

CELL 0 CELL 2 CELL 4 CELL 6 CELL 8

RING B → C/a C/a C/a C/a C/a

RING A → C/b C/b C/b C/b C/b
20 22 24 26 28

128 ✗ ✗ 128 128 ✗ ✗ 128

23 25 27 29

CELL 1 CELL 3 CELL 5 CELL 7 CELL 9

C/a ← C/a C/a C/a C/a
21

C/b C/b C/b C/b C/b
11 13 15 17 19

*FIG. 3*

cache_parity (8)
cache_data (64)
cache_op (4)
cache_flow_rout (2)
cache_flow_dmn (4)
cache_arb (3)

CACHE 0

cell_reset (1)
cell_clk50 (1)
cell_clk_sync (1)

p_cadt_stall (1)
p_long_stall (1)
p_data_parity (8)
p_data (64)
p_data_cmd (8)
p_cache_grant (1)
p_cache_rsp_rep (1)

p_quash (1)
p_instr_stall (1)
p_instr_parity (4)
p_instr (32)
p_instr_cmd (2)
cache_ins_req (1)

└40

p_cache_rsp_req (1)
p_cache_grant (1)
p_data_cmd (8)
p_data (64)
p_data_parity (8)
p_long_stall (1)

p_cache_ins_req (1)
p_instr_cmd (2)
p_instr (32)
p_instr_parity (4)
p_instr_stall (1)
p_quash (1)

PROC 0

p_cadt_stall (1)

dmn_reset ▷———

p_reset (1)

cell_reset (1)
cell_clk50 (1)
cell_clk_sync (1)

└50

# FIG. 2B

EP 0 322 116 B1

FIG. 2A

dmna_data_in_l W=64      dmna_data_in_l(64)      dmna_data_out_l(64)      dmna_data_out_l W=64
dmna_parity_in_l W=8      dmna_parity_in_l(8)      dmna_parity_out_l(8)      dmna_parity_out_l W=8
dmna_hdr_in_l      dmna_hdr_in_l(1)      dmna_hdr_out_l(1)      dmna_hdr_out_l
dmna_empty_in_l      dmna_empty_in_l(1)      dmna_empty_out_l(1)      dmna_empty_out_l
dmna_data_in_h W=64      dmna_data_in_h(64)      dmna_data_out_h(64)      dmna_data_out_h W=64
dmna_parity_in_h W=8      dmna_parity_in_h(8)      dmna_parity_out_h(8)      dmna_parity_out_h W=8
dmna_hdr_in_h      dmna_hdr_in_h(1)      dmna_hdr_out_h(1)      dmna_hdr_out_h
dmna_empty_in_h      dmna_empty_in_h(1)      dmna_empty_out_h(1)      dmna_empty_out_h
dmnb_data_in_l W=64      dmnb_data_in_l(64)      dmnb_data_out_l(64)      dmnb_data_out_l W=64
dmnb_parity_in_l W=8      dmnb_parity_in_l(8)      dmnb_parity_out_l(8)      dmnb_parity_out_l W=8
dmnb_hdr_in_l      dmnb_hdr_in_l(1)      dmnb_hdr_out_l(1)      dmnb_hdr_out_l
dmnb_empty_in_l      dmnb_empty_in_l(1)      dmnb_empty_out_l(1)      dmnb_empty_out_l
dmnb_data_in_h W=64      dmnb_data_in_h(64)      dmnb_data_out_h(64)      dmnb_data_out_h W=64

dmnb_parity_in_h W=8      dmnb_parity_in_h(8)      dmnb_parity_out_h(8)      dmnb_parity_out_h W=8
dmnb_hdr_in_h      dmnb_hdr_in_h(1)      dmnb_hdr_out_h(1)      dmnb_hdr_out_h
dmnb_empty_in_h      dmnb_empty_in_h(1)      dmnb_empty_out_h(1)      dmnb_empty_out_h

dmn_cell_addr W=8      dmn_cell_addr(8)      CIO      dmna_clk50_l(1)      dmna_clk50_l
     dmna_clk50_h(1)      dmna_clk50_h
cache_arb(3)      dmnb_clk50_l(1)      dmnb_clk50_l
cache_flow_dmn(4)      dmnb_clk50_h(1)      dmnb_clk50_h
cache_flow_rout(2)
cache_op(4)      cell_reset(1)
cache_data(64)      cell_clk50(1)
cache_parity(8)      cell_clk_sync(1)

10

TO 40(FIG.2B)

TO 40 (FIG.2B)

EP 0 322 116 B1

EP 0 322 116 B1

dmna_data_in_l W=64 — dmna_data_in(64)
dmna_parity_in_l W=8 — dmna_parity_in(8)
dmna_hdr_in_l — dmna_hdr_in(1)
dmna_empty_in_l — dmna_empty_in(1)

dmn_cell_addr W=8 — dmn_cell_addr(8)
dmna_clk50_l — dmn_clk50(1)

cache_arb_id0(3)
cache_arb_idi(3)

cache_arb W=3 — cache_arb_id4_2(3)
cache_flow_dmn W=4 — 3:0 — cache_flow_dmn(1)
cache_flow_rout — W=2 — cache_flow_rout(2)
cache_opt W=4 — cache_op(4)
cache_data W=64 — 31:0 — cache_data(32)
cache_parity W=8 — cache_parity(4)
— 3:0

cell_reset — cell_reset(1)
cell_clk50 — cell_clk50(1)
cell_clk_sync — cell_clk_sync(1)

CIU0

dmna_data_out(64) — dmna_data_out_l W=64
dmna_parity_out(8) — dmna_parity_out_l W=8
dmna_hdr_out(1) — dmna_hdr_out_l W=2
dmna_empty_out(1) — dmna_empty_out_l W=3

sram_data_a(4) — data(4)
sram_addr_9(4) — 3:0 — address(16)
sram_addr(6) — 9:4 —
— 15:10 — SRAM 64k x 40

sram_ce(1) — ce(1)
sram_we(1) — we(1)
sram_data_p(4)
hit_in(1)
hit_out(1)

72

70

TO FIG. 4B

TO FIG. 4B

# FIG. 4A

20

cell_clk_sync(1)
cell_clk50(1)
cell_reset(1)

7:4
63:32

cache_parity(4)
cache_data(32)
cache_op(4)
cache_flow_rout(2)
cache_flow_dmn(1)
cache_arb_id4_2(3)

cache_arb_id1(3)
cache_arb_id0(3)

CIU0

2

dmna_clk50_h ▷        dmn_clk50(1)
                      dmn_cell_addr(8)

dmna_empty_in_h ▷     dmna_empty_in(1)
dmna_hdr_in_h ▷       dmna_hdr_in(1)
dmna_parity_in_h ▷    dmna_parity_in(8)          W=8
dmna_data_in_h ▷      dmna_data_in(64)

W=64

hit_out(1)
hit_in(1)
sram_data_p(4)
sram_we(1)
sram_ce(1)

we(1)
ce(1)

9:4
15:10

SRAM64kx40

sram_addr(6)
sram_addr_9(4)
sram_data_a(4)

3:0

address(16)
data(4)

71

dmna_empty_out(1)        ▷ dmna_empty_out_h
dmna_hdr_out(1)          ▷ dmna_hdr_out_h
dmna_parity_out(8)       ▷ dmna_parity_out_h  W=8
dmna_data_out(64)        ▷ dmna_data_out_h  W=64

73

20

## FIG. 4B

EP 0 322 116 B1

**FIG. 4C**

TO FIG. 4C

TO FIG. 4C

—63

61

cell_clk_sync(1)
cell_clk50(1)
cell_reset(1)
cache_parity(4)
cache_data(32)
cache_op(4)
cache_flow_rout(2)
cache_flow_dmn(1)
cache_orb_id4_2(3)

7:4
63:32
3

cache_orb_id1(3)
cache_orb_id0(3)

CIU 0

hit_out(1)
hit_in(1)
sram_data_p(4)
sram_we(1)
sram_ce(1)

sram_addr(6)
sram_addr_g(4)
sram_data_a(4)

we(1)
ce(1)

SRAM 64k x 40

9:4
15:10
3:0

address(16)
data(4)

dmnb_clk50_h

dmn_clk50(1)
dmn_cell_addr(8)

dmnb_empty_in_h
dmnb_hdr_in_h
dmnb_parity_in_h
dmnb_data_in_h

W=8
W=64

dmn_empty_in(1)
dmna_hdr_in(1)
dmn_parity_in(8)
dmna_data_in(64)

dmna_empty_out(1)
dmna_hdr_out(1)
dmna_parity_out(8)
dmna_data_out(64)

dmnb_empty_out_h
dmnb_hdr_out_h
dmnb_parity_out_h  W=8
dmnb_data_out_h  W=64

# FIG. 4D

**FIG. 5A**

EP 0 322 116 B1

**clu_tg 0** (81)

| | |
|---|---|
| cl_phi_q(1) | cl_phil_q |
| cl_phi2(1) | cl_phi2 |
| cl_phil(1) | cl_phil |
| cld5_phi2(1) | cld5_phi2 |
| cld5_phil(1) | cld5_phil |
| c3_phi2(1) | c3_phi2 |
| c3_phil(1) | c3_phil |
| dmn_clk_l(1) | dmn_clk_h(1) |

**clu_dir 0** (86) — 72

| | |
|---|---|
| cl_phil_q — phil_q(1) | slb_ram_out(7) |
| cl_phi2 — phi2(1) | slb_rom_in(7) |
| cl_phil — phil(1) | created(1) |
| cg(66) | parity_error(1) |
| | summary(1) |
| | hit(2) |
| | cmd(4) |
| sram_addr(6) | group(4) |

**clu_dp 0** (84)

| | |
|---|---|
| cl_phi2 — cl_phi2(1) | cg_parity_l(1) — 64 |
| cl_phil — cl_phil(1) | cg_parity_h(1) — 65 |
| cld5_phi2 — cld5_phi2(1) | cg_l(32) — 31:0 |
| cld5_phil — cld5_phil(1) | cg_h(32) — 63:32 |
| c3_phi2 — c3_phi2(1) | |
| c3_phil — c3_phil(1) | |
| clu_type(1) | |
| dmn_in_l(32) | |
| dmn_ecc_l(4) | cmd_preview(3) |
| dmn_in_h(32) | cmd_l_out(8) |
| dmn_ecc_h(4) | cmd_h_out(8) |
| cache_out(32) | insrt_cmd(2) |
| cache_in(64) | insrt_stat(2) |
| cache_ecc_out(4) | extract_cmd(2) |
| cache_ecc_in(8) | extract_stat(2) |
| dmn_out(32) | cg_bus_cmd(8) |
| dmn_ecc_out(4) | dmn_cmd(4) |

31:0
3:0
63:32
7:4
0
5:0
9:6
0

TO FIG. 5C

## FIG. 5B

# FIG. 5C

cl_phi1    cl_phi2

| cl_phi1(1) | cl_phi2(2) | 82 |
|---|---|---|
| new_sram_data(4) | sram_cntrl0 | |
| sram_data_o(4) | sram_cmd(2) | |
| sram_data_p(4) | new_state(3) | |
| sram_ce(1) | state(3) | |
| sram_we(1) | sram_error(1) | |

TO FIG. 5A

**85**

ciu_master0

| sram_cod(2) | dmn_cmd(4) |
| new_state(3) | cg_bus_cmd(8) |
| state(3) | extract_stat(2) |
| sram_error(1) | extract_cmd(2) |
| | insrt_stat(2) |
| | insrt_cmd(2) |
| other_hit(1) | cmd_h(8) |
| dmn_reset(1) | cmd_l(8) |
| cache_reset(1) | cmd_preview(3) |
| dmn_empty_out(1) | dir_cmd(4) |
| dmn_hdr_out(1) | hit(2) |
| dmn_empty_in(1) | summary(1) |
| dmn_hdr_in(1) | parity_error(1) |
| rcv_cb(1) | created(1) |
| send_cb(1) | new_slb_state(7) |
| cb_cmd(2) | slb_state(7) |
| | c3_phi2(1) | c3_phi2 |
| | c3_phi1(1) | c3_phi1 |
| | cl_phi2(1) | cl_phi2 |
| | cl_phi1(1) | cl_phi1 |

0

cl_phi1    cl_phi2    83

| id(2) | cl_phi1(1) | cl_phi2(1) |
|---|---|---|
| cache_flow_o(1) | cb_cntrl0 | rcv_cb(1) |
| cache_flow_i(2) | | send_cb(1) |
| cache_op(4) | | cb_cmd(2) |
| cache_arb(5) | | extract_empty(1) |

EP 0 322 116 B1

**FIG. 6**

**FIG. 7**

| ADDR | ADDR |
|------|------|
| CMD | CMD |
| DATA 0 | DATA 1 |
| DATA 2 | DATA 3 |
| DATA 4 | DATA 5 |
| DATA 6 | DATA 7 |

**FIG. 8**